# EUROPÄISCHE PATENTSCHRIFT

(11) **EP 2 540 454 B1**
(45) Veröffentlichungstag und Bekanntmachung des Hinweises auf die Patenterteilung: **26.08.2015**
(21) Anmeldenummer: 12004801.2
(22) Anmeldetag: 26.06.2012
(51) Int. Cl.: B25J 9/10, B25J 17/02, B25J 9/00

(54) **Hybridroboter auf der Basis von drei Linearaktoren deren Achsen sich schneiden, eines Parallelitätshalters, eines multifunktionalen Raumgelenkes, eines Mehrachsenraumgelenkes und einer Raumorientierungseinheit**
Hybrid robot on the basis of three linear actuators with intersecting axles, a parallelism maintainer, a multifunctional pivotal link, a multi-axle pivotal link and a spatial orientation unit
Robot hybride sur la base de trois actionneurs linéaires avec des axes qui se coupent, d'un support de parallélisme, d'une articulation spatiale multifonctions, d'une articulation spatiale à plusieurs axes et d'une unité d'orientation dans l'espace.

(30) Priorität: 28.06.2011 DE 102011105616
(43) Veröffentlichungstag der Anmeldung: 02.01.2013
(73) Patentinhaber: CAE Consulting & Engineering GmbH, 71083 Herrenberg (DE)
(72) Erfinder: Ezechias, Jozef, Dr., 71083 Herrenberg (DE)

(56) Entgegenhaltungen:
- US-A1- 2004 126 198
- US-A1- 2010 206 120
- US-B1- 6 497 548

## Beschreibung

### Die Erfindung betrifft einen Hybridroboter

Einsatzgebiet der Hybridroboter sind unterschiedlichste Anwendungen in der Handhabung von Werkstücken, in der Verpackungsindustrie, Waferhandling und für Anwendungen in automatisierbaren Prozessen wie Schweissen ,Schneiden, Fräsen, Bohren und des gleichen

Aus der US-A-2004 126 198 ist ein Roboter auf Basis der Parallelkinematik nach der **Fig.17**, der sogenannte Tricept, bekannt, siehe Figur 10 dieser Druckschrift. Tricept ist eine Kombination von 4 Linearachsen mit einer rotatorischen Orientierungseinheit. Die 4 linearen Achsen sind in einem Gestell gelagert und dieses Gestell wird an eine zusätzliche Säule befestigt.

Aus der Figur 11 dieser Druckschrift ist ein weiterer Roboter bekannt, der als Parallelitätehalter eine Koppelplatte aufweist die durch gelenkig angebrachte parallele Koppelstäbe mit einer raumfesten Befestigungsplatte verbunden ist und ständig parallel zu dieser gehalten wird.

In **Fig. 18** ist ein Hexapod mit 6 Stäben (Stabstruktur 3-2-1) als eine kinematische Skizze dargestelt. Aus der Fig 18 ist ersichtlich, dass die obere bewegte Platte (1) nur eingeschränkte Drehungen und Neigungen durchführen kann.

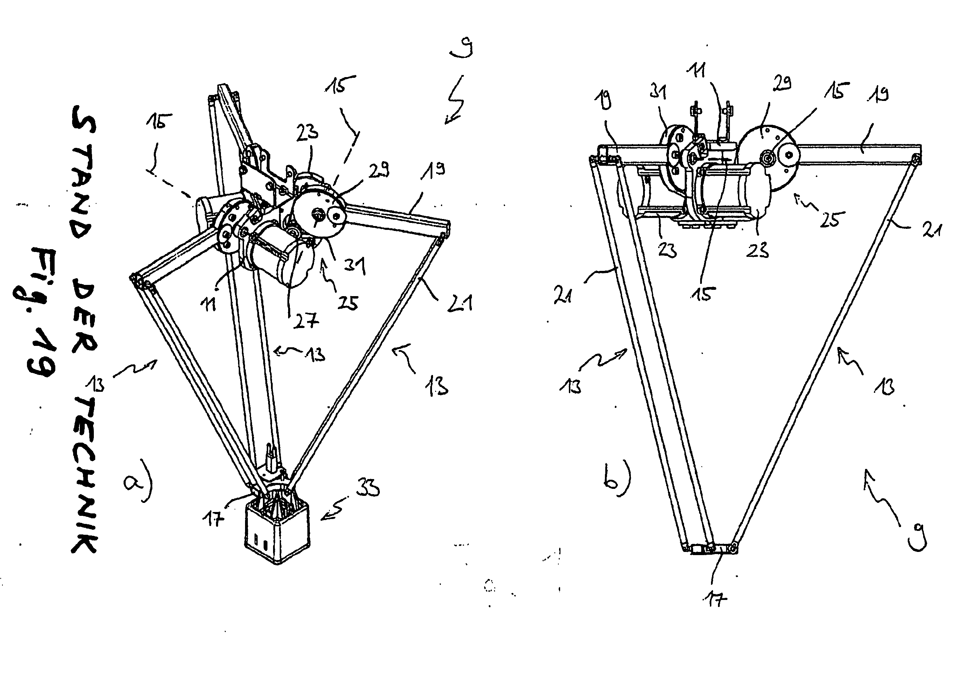

In **Fig. 19** ist ein Roboter mit delta kinematik dargestellt. Sowohl die translatorischen als auch rotatorischen Bewegungen sind eingeschränkt. Die delta-Kinematik wird für einfache pick and place Bewegungen eingesetzt. Hohe Übersetzungen sind notwendig, da die kurze Balken , die die Zug-, Druckstäbe antreiben lediglich kurze rotatorische Winkelbewegungen ausführen.

Weiter gehören zum Stand der Technik Roboter auf Basis der rotatorische Gelenke, die Gelenkarmroboter.

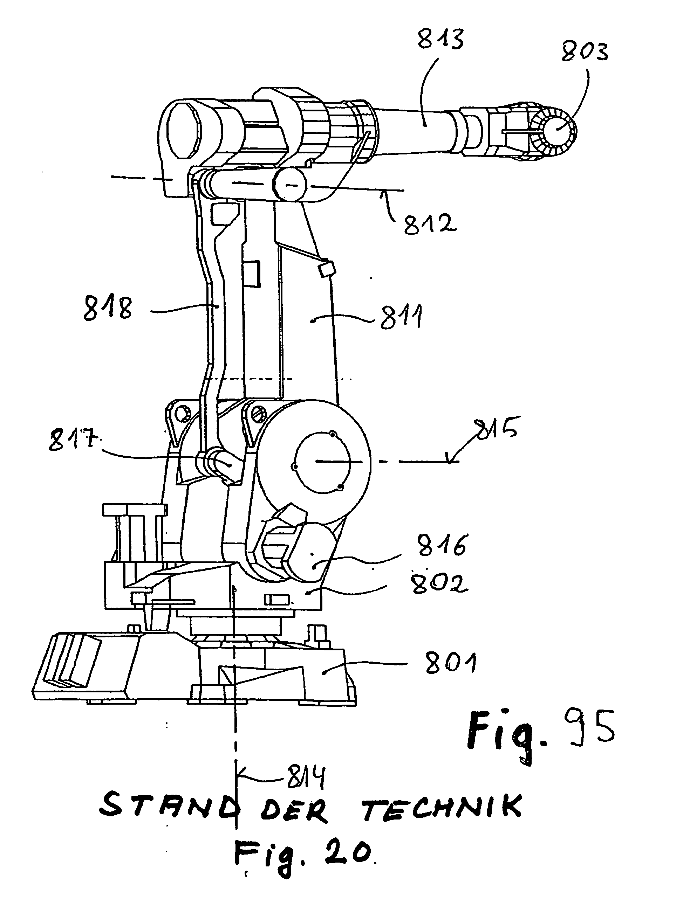

In der **Fig. 20** ist ein Gelenkarmroboter dargestellt, es ist ersichtlich, dass bei Serienkinematik jedes Folgenantriebs vom TCP (Tool Center Point) bis zur Grundplatte fortschreitend den nachfolgenden Antrieb zusätzlich belastet.

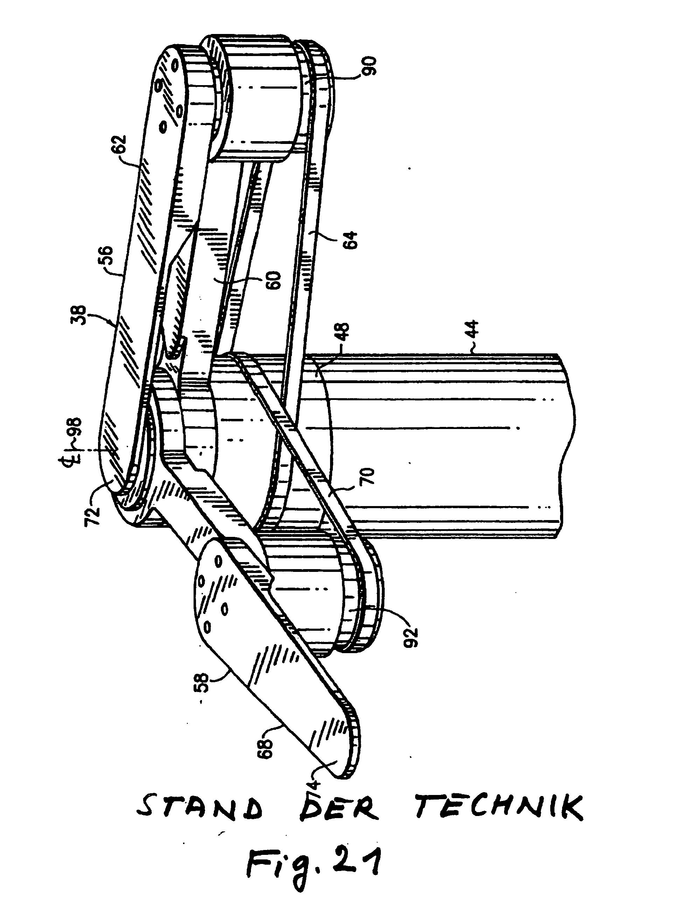

In **Fig. 21** ist ein Scara Roboter dargestellt. Typische Anwendungen sind Montage und Handling z.B. von Waferplatten.

Roboter auf Basis von rotatorischen Gelenken haben im Vergleich zu Parallelkinematikrobotern wesentlich geringere Steifigkeit , dafür aber mehr Flexibilität das TCP-Werkzeug ( Bohrer, Fräse, Brenner ) an das Werkstück bezüglich der Orientierung auszurichten.

Aufgabe der Erfindung ist es einen Roboter zu entwickeln, der die Vorteile der hohen Steifigkeit eines Parallelkinematikroboters sicherstellt und gleichzeitig die Wendigkeit und die Flexibilität eines klassischen Gelenkarmroboters das TCP-Werkzeug bezüglich des Werkstücks zu orientieren und positionieren, hat.

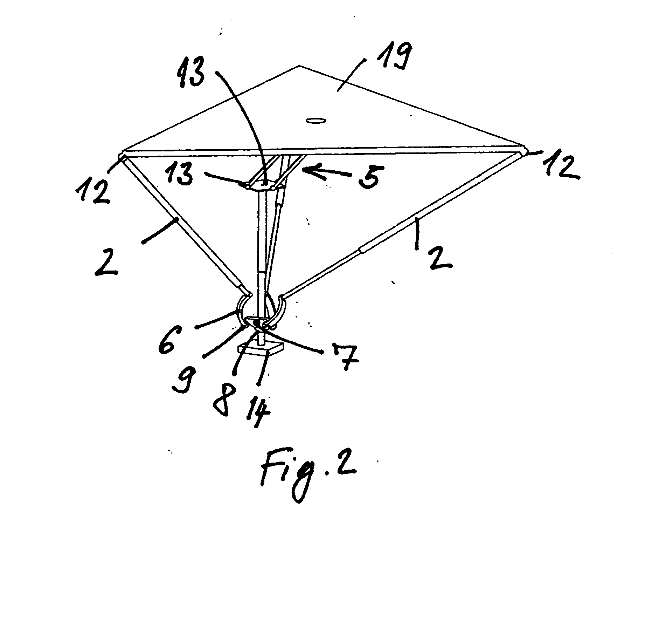

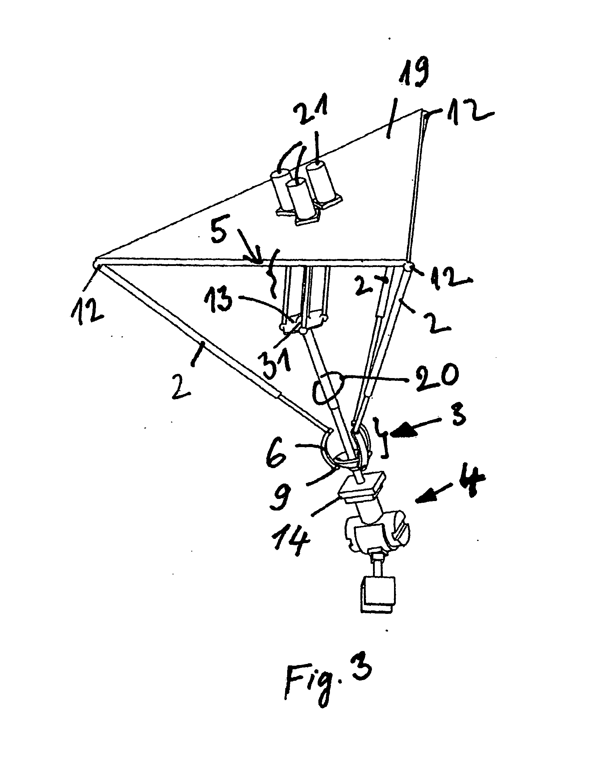

Diese Aufgabe wird erfindungsgemäß mit einem Hybridroboter nach Anspruch 1 gelöst. Die Figuren 2 und 3 zeigen den Aufbau eines solchen Hybridroboters.

Die räumliche translatorische Positionierung des Hybridroboters erfolgt mit drei in der Länge veränderlichen Stäben, den sogenannten Linearaktoren **(2).**

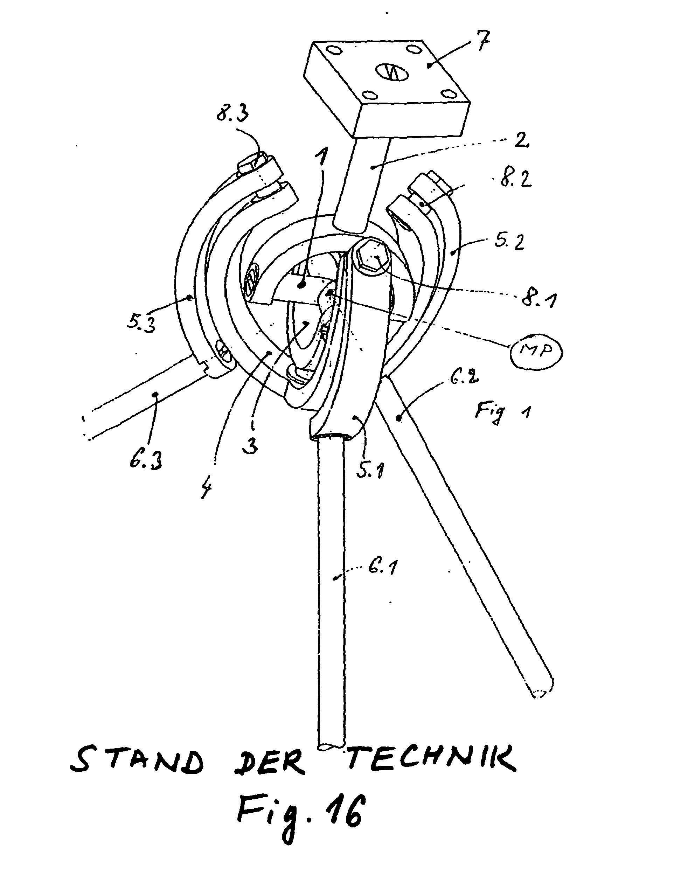

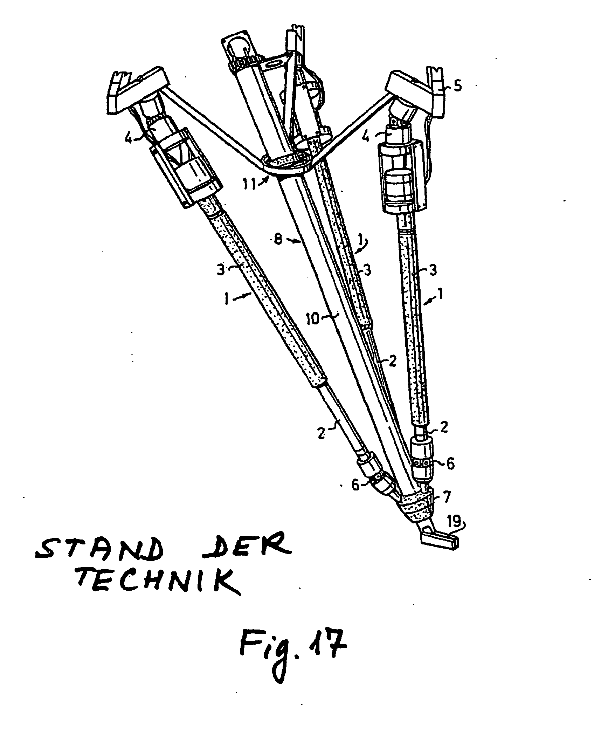

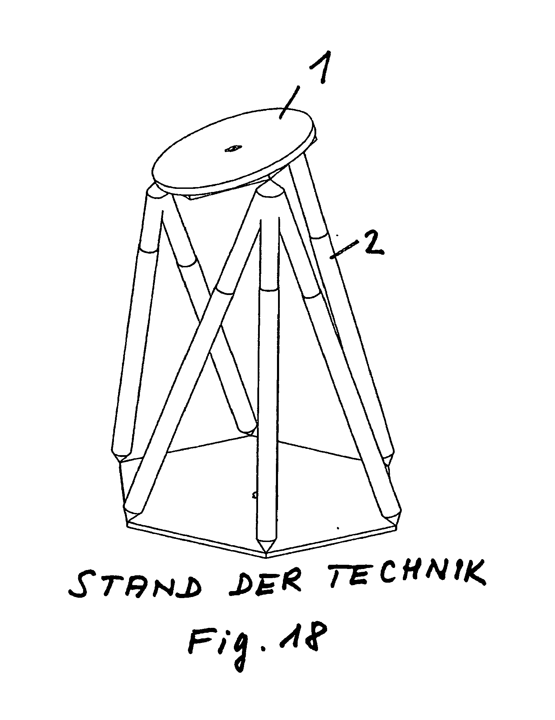

Ein Raumgelenk dargestellt in **Fig 16** für den Anschluß einer beweglichen Parallekinematikplattform **(1)** in **Fig. 18** ist aus DE 10 2007 005 458 A1 bekannt. Dieses Raumgelenk setzt sich zusammen aus einem Käfig, Gelenkverbindern und einem Kardangelenk mit einer Anschlußplatte für die Befestigung der beweglichen Parallekinematikplattform **(1)** zusammen.

Das multifunktionale Raumgelenk unterscheidet sich wesentlich sowohl von der Anwendung her und als auch von den zum Einsatz kommenden Komponente von dem Raumgelenk DE 2007 005 458 A1.

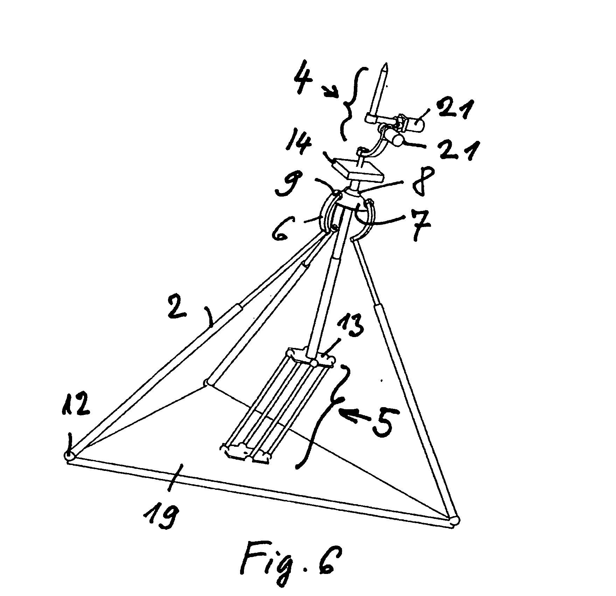

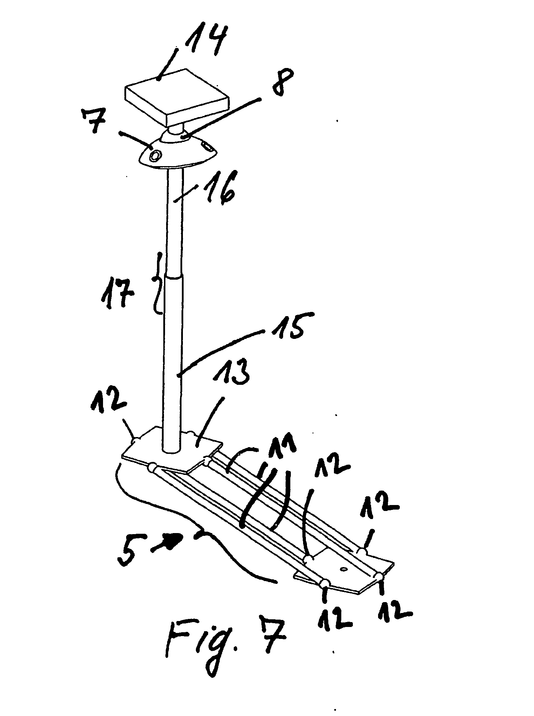

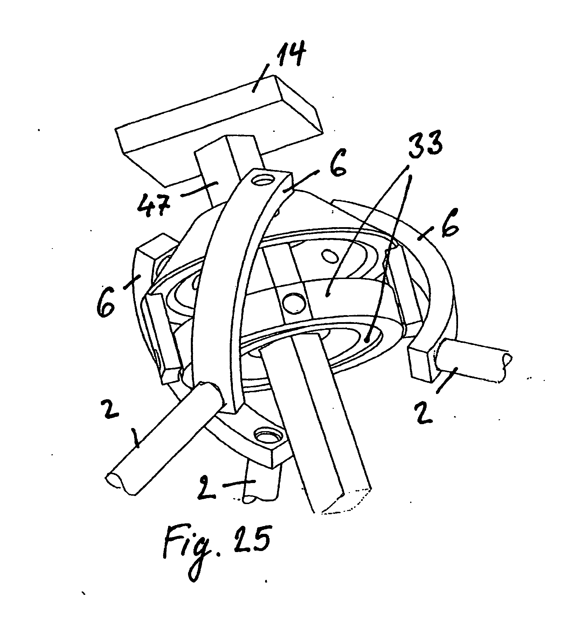

Das neue erfinderische multifunktionale Raumgelenk **(3)** hat mehrere Funktionen. Eine Aufgabe ist es die drei Stäbe **(2)** zu einem Schnittpunkt zu führen. Das multifunktionale Raumgelenk hat zusätzlich eine zweite Aufgabe einen Parallelitätshalter **(5)** **Fig.6** räumlich über ein Kugeldrehgelenk **(8)** wahlweise eine Kardanaufhängung **(33)** dargestellt in **Fig.25** translatorisch zu führen und zu positionieren und die dritte Aufgabe ist eine Raumorientierungseinheit für Werkzeug **(4)** aufzunehmen.

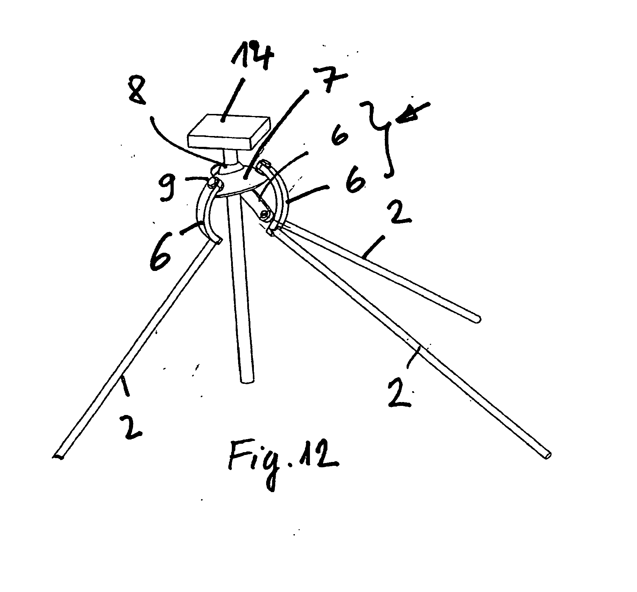

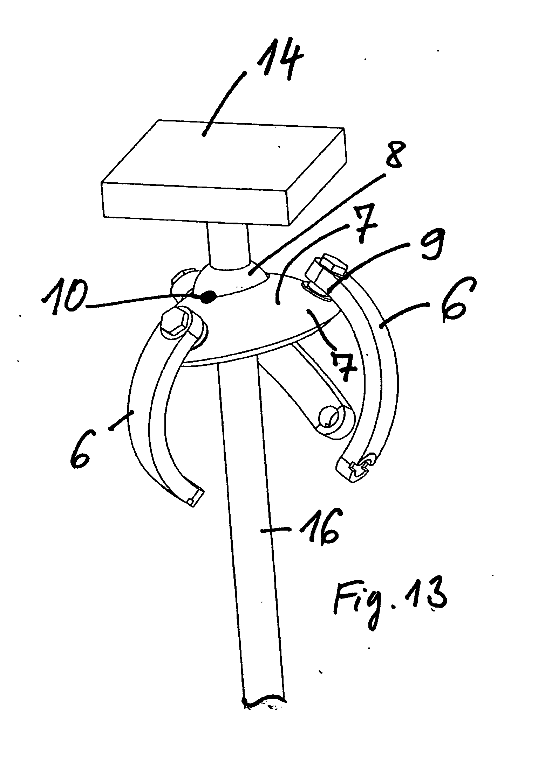

Das multifunktionale Raumgelenk **Fig. 12** setzt sich zusammen aus einer Kugelkalotte **(7)** bzw. Kegelkalotte, einem Kugelgelenk **(8)** und 3 Gelenkverbindern **(6).**

Die Kugelkalotte wahlweise Kegelkalotte besitzt drei Drehgelenke **(9)** und eine Kugelgelenklagerung **(10)** für die Aufnahme eines Kugelgelenkes **(8)** wahlweise eine Kardanaufhängung **(33)** oder Radial-Axialkipplager, das gleichzeitig Kräfte in drei Richtungen aufnehmen kann.
Die Kugelkalotte **(7)** ändert bei Positionsänderung der linearen Aktoren **(2)** Ihre Raumorientierung fortwährend. Um ein Werkzeug ohne zusätzlichen Aufwand einer Raumorientierungseinheit **(4)** wie z.B. Zentralhand mit weiteren Antriebsachsen zu positionieren wurde ein räumlicher Parallelitätshalter **(5)** erfunden und entwickelt.

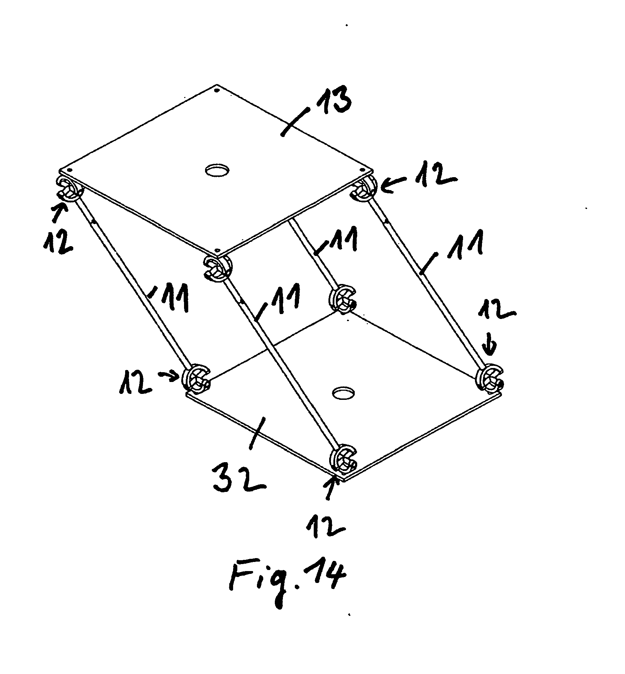

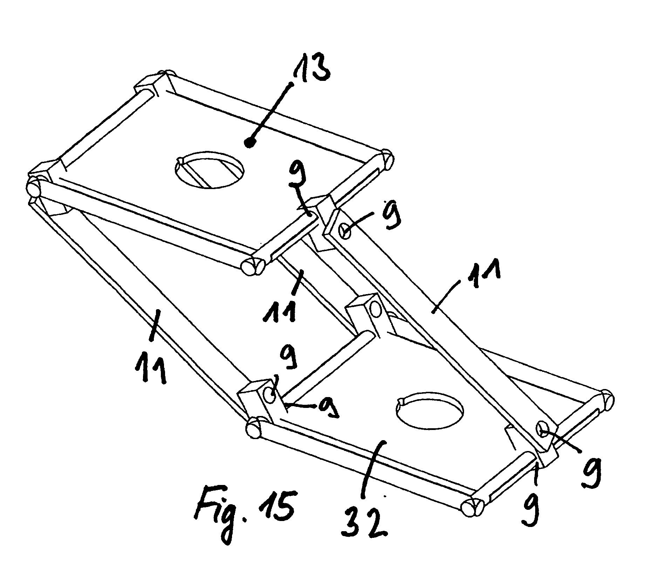

Mehrere mögliche konstruktive Ausführungen des räumlichen Parallelitäthalters **(5)** sind in **Fig 14****,** **15****,** **27****,** **28****,** **29**, dargestellt.

Der räumliche Parallelitätshalter **(5)** hat die Aufgabe die untere Koppelplatte **(13)** bei ihrer beliebigen räumlichen Position in Bezug auf die raumfeste Bodenplatte (**32**) ständig parallel zu halten. Siehe als Beispiel die **Fig. 2**

Der räumliche Parallelitätshalter **(5)** setzt sich zusamen aus 2 ,3 oder 4 Koppelstäben **(11)** die an jedem Ende mit einem Kardangelenk **(12)**, wahlweise zwei Drehgelenken oder Kugelgelenken verbunden sind, einer unteren Koppelplatte **(13)**, einer oberen PCT-Koppelplatte **(14)**, einem senkrecht auf der unteren Koppelplatte befestigten Stab **(15)** mit Führung und einem an die obere Koppelplatte befestigten Stab **(16)** mit Führung **(17).** Der obere Stab hat im oberen Bereich ein Kugelgelenk **(8)** das in der Kugelkalotte **(7)** gelagert ist. Der obere Stab **(16)** und der untere Stab **(15)** bilden miteinander eine lineare Führung **(17).**

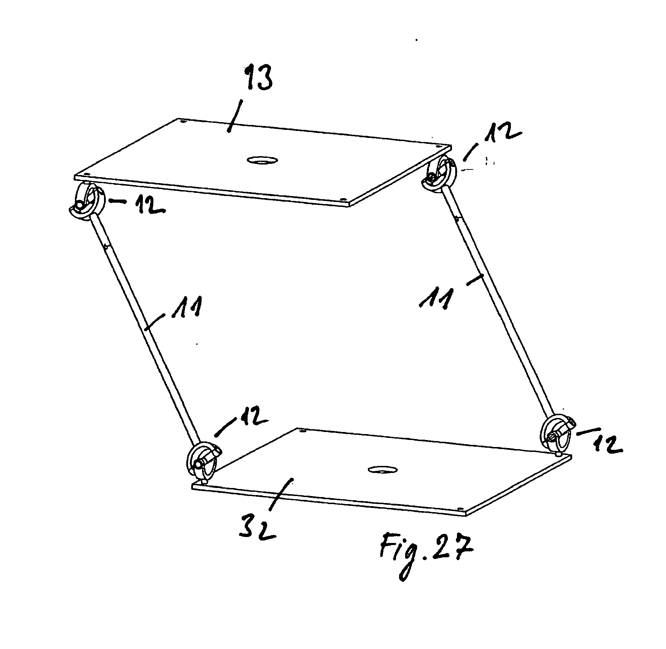

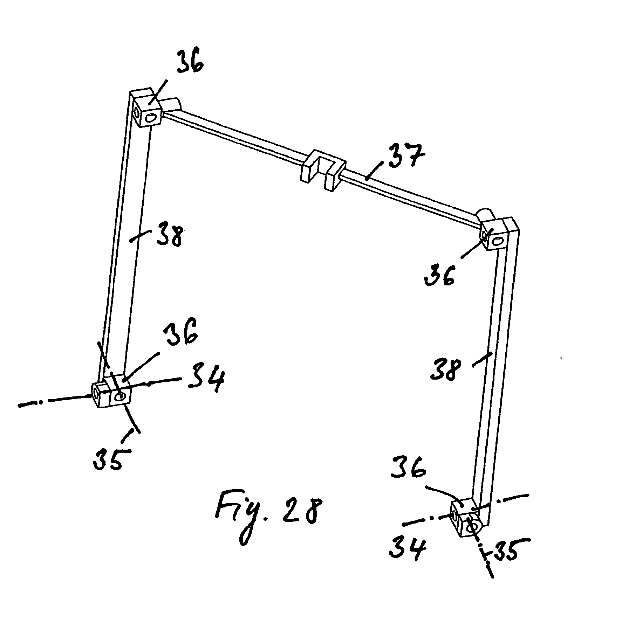

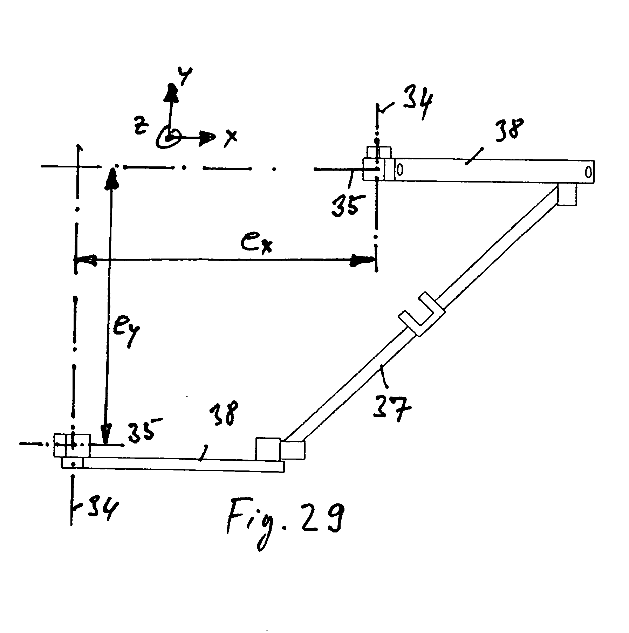

Die Wirkung der Kardangelenke **(12)** dargestellt in **Fig 27** kann wahlweise auch durch zwei Drehgelenke mit Drehachsen **(34)** und **(35)** dargestellt in **Fig 28** ersetzt werden. Die Drehachsen (**34)** und **(35)** sind zueinander um die Abstände ex und ey versetzt so wie in der **Fig. 29** als Ansicht von oben dargestellt ist.

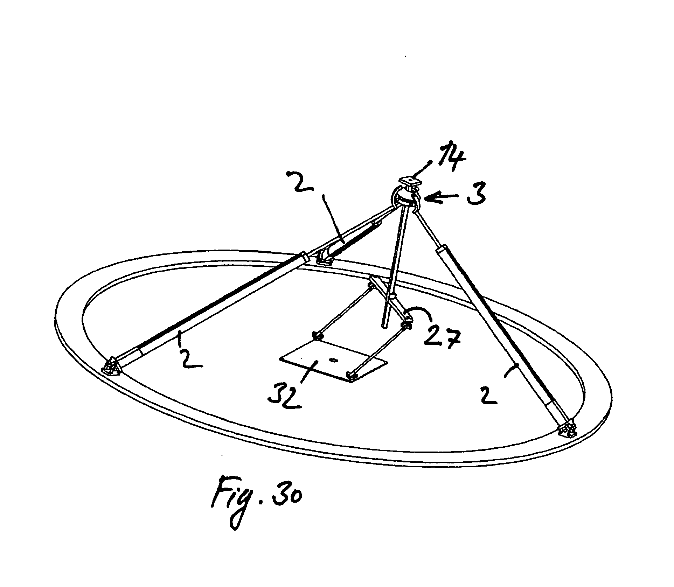

Das Zusammenwirken des Paralleitätshalters auf Basis von zwei räumlich kippbaren Dreharmen **(39),** mit dem multifunktionalen Raumgelenk **(3)** und der linearen Aktoren **(2)** ist in der **Fig. 30** dargestellt.

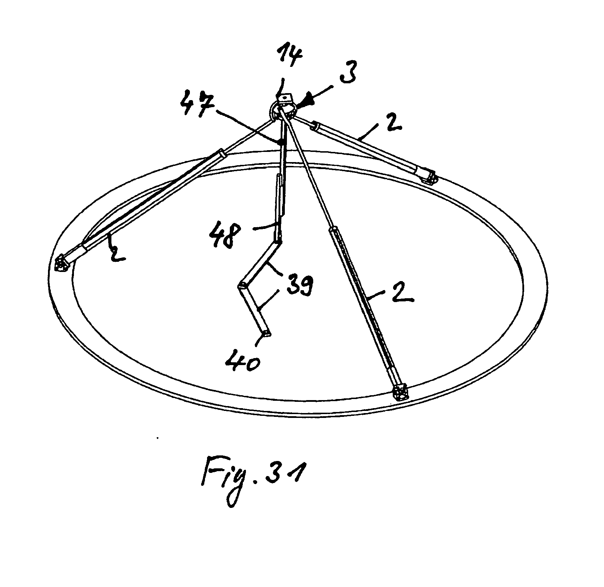

Weitere Möglichkeiten die Parallelität der TCP Platform **(14)** in Verbindung mit der Führung durch das multifunktionale Raumgelenk **(3)** zu erzwingen ist in den Figuren **31****,****32****,** **33****,** **34** dargestellt.

In **Fig.31** setzt sich der vom multifunktionalen Raumgelenk **(3)** translatorisch geführte Parallelitäthalter aus einem Zweischlag **(39)** und aus zwei mit Schubgelenk **(44)** verbundenen Stäben **(47)** und **(48)** zusammen. Die zwei Stäbe **(47)** und **(48)** sind senkrecht zu dem Zweischlag **(39)** positioniert. Stab **(48)** ist fest mit dem Arm des Zweischlages **(39)** verbunden

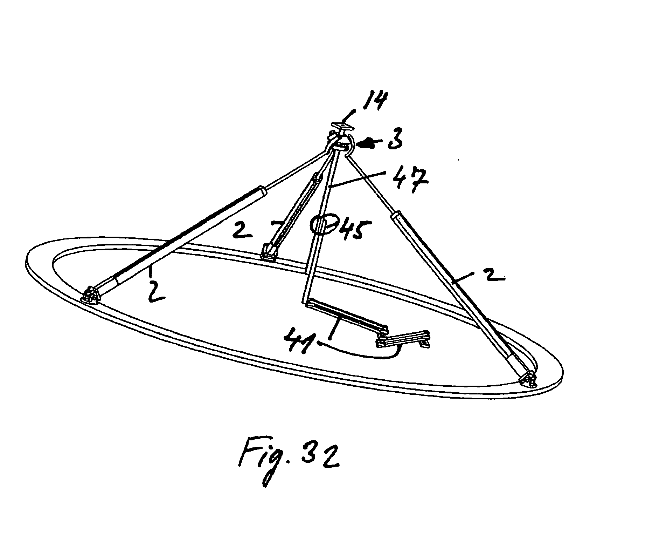

In **Fig.32** setzt sich der vom multifunktionalen Raumgelenk **(3)** translatorisch geführter Parallelitäthalter aus einem Parallelogramm **(41)** und aus zwei mit Schubgelenk **(44)** verbundenen Stäben **(47)** und **(48)** zusammen. Die zwei Stäbe **(47)** und **(48)** sind senkrecht zum Parallogramm **(41)** positioniert. Stab **(48)** ist fest mit dem Ende Parallelogramms **(41)** verbunden

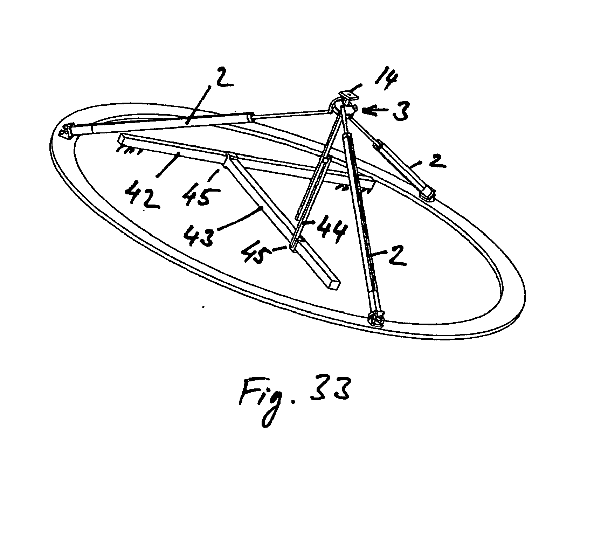

In **Fig.33** setzt sich der vom multifunktionalen Raumgelenk **(3)** translatorisch geführter Parallelitäthalter aus einem Kreuzschlittensystem gebildet vom Längsachse **(42),** Querrachse **(43)** und Hohenachse **(44).** Die Hohenachse **(44)** ist mit zur zu TCP Platform **(14)** gehörigem Stab **(47)** mit einem Schubelenk **(45)** verbunden.

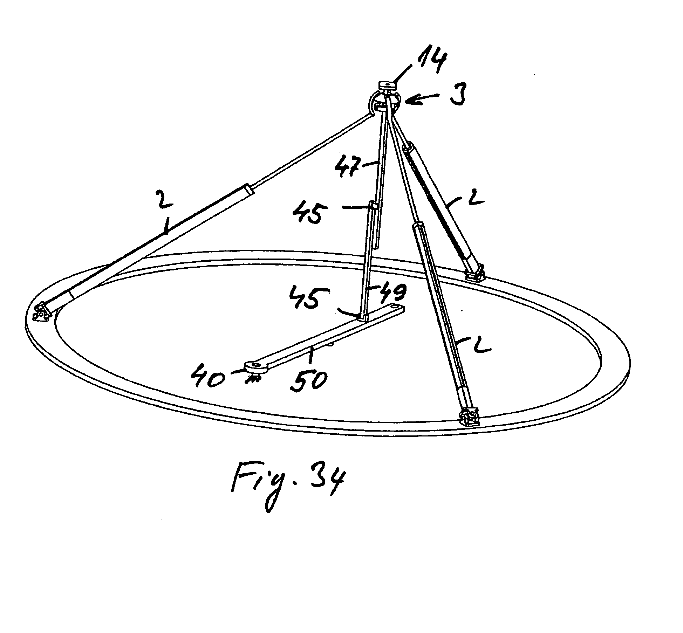

In **Fig.34** setzt sich der vom multifunktionalen Raumgelenk **(3)** translatorisch geführter Parallelitäthalter aus einem Schwenkarm **(53)** und zwei über Schubgelenk **(45)** verbundene Stäbe **(47)** und **(49)** zusammen. Stab **(49)** ist an Schwenkarm **(53)** mit einem Schubgelenk **(45)** angebunden.

Die TCP-Koppelplatte **(14),** die sich oberhalb Kugelkalotte **(7)** befindet kann eine Raumorientierungseinheit **(4)** wahlweise Greifer aufnehmen.

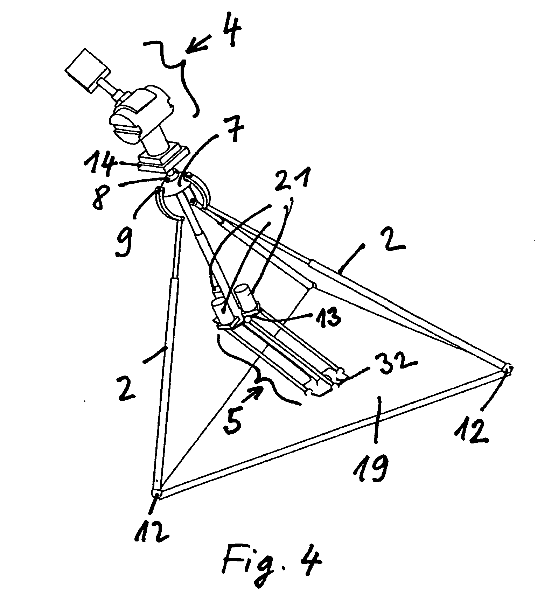

Eine weitere Möglichkeit ist, dass auf der TCP-Koppelplatte **(14)** eine Raumorientierungseinheit **(4)** wie z.B. eine Zentralhand befestigt wird und die Getriebemotoren **(21)** dieser Zentralhand **(4)** befinden sich dann auf der TCP-Koppelplatte **(14),** so wie das in der **Fig. 4** dargestellt ist.

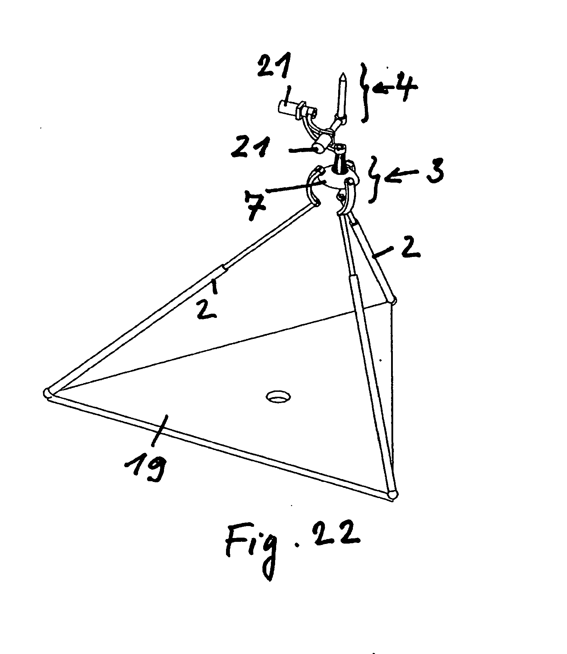

Die Raumorientierungseinheit **(4)** kann bei kleineren Belastungen auch direkt an die Kugelkalotte **(7)** befestigt werden , wie das auf der **Fig.** 22 dargestellt ist.

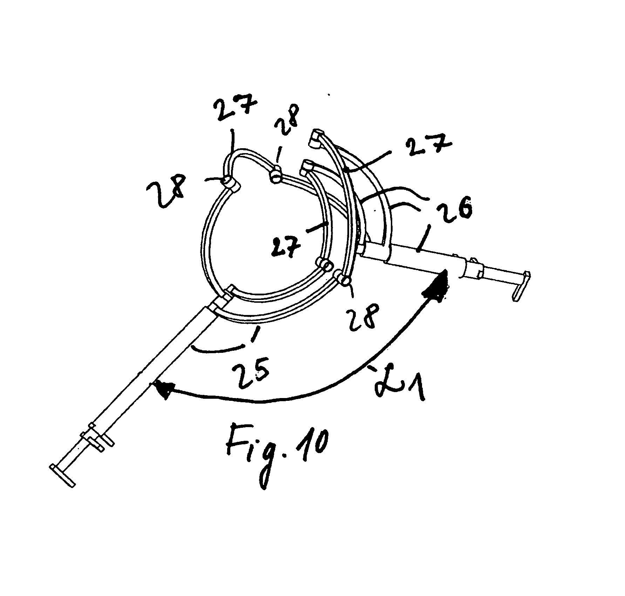

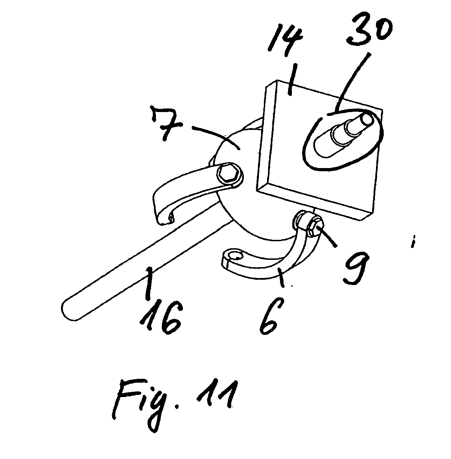

Der Antrieb der rotatorischen Raumorientierumgsachsen erfolgt über 3 fach ineinander gelagerte Wellen, **Fig 3****.**
Die Getriebemotoren **(21)** sind auf der raumfesten Bodenplatte (**32**) befestigt, die Verbindung der Dreiwellensätze (30) erfolgt dann mit einem Mehrfachachsenraumgelenk **(31)** dargestelt in **Fig. 3** und **Fig. 10****.**

Wenn die Getriebemotoren **(21)** auf einer raumfesten Platte **(19)** befestigt werden , dann ändert sich die Winkelstellung der Antriebsachsen **(20)** während der Positionänderung der Stäbe fortwährend.

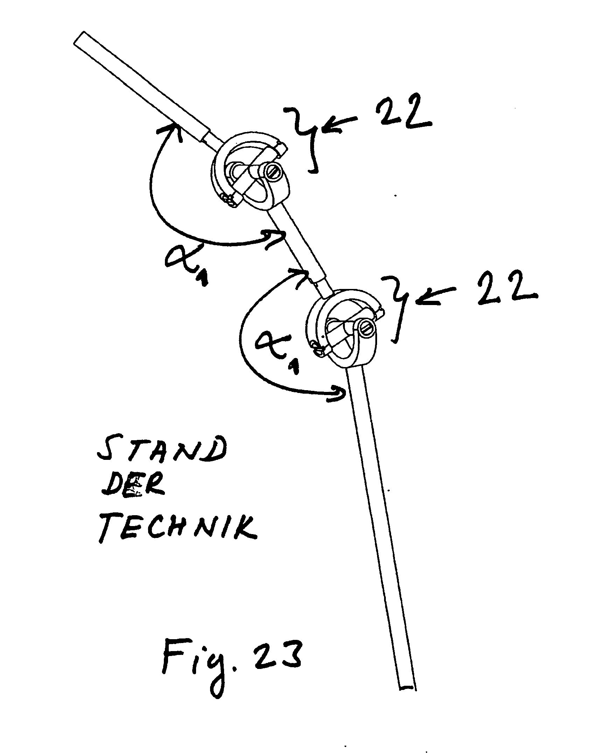

Wenn nur zwei sich in einem Punkt schneidenden Antriebswellen, die unter einem Winkel ALFA1 zueinander stehen, verbunden werden sollen, dann wird die Verbindung nach dem Stand der Technik mit einem Kardangelenk **(22)** hergestellt. Derartige Verbindung ist in **Fig. 23** dargestellt.

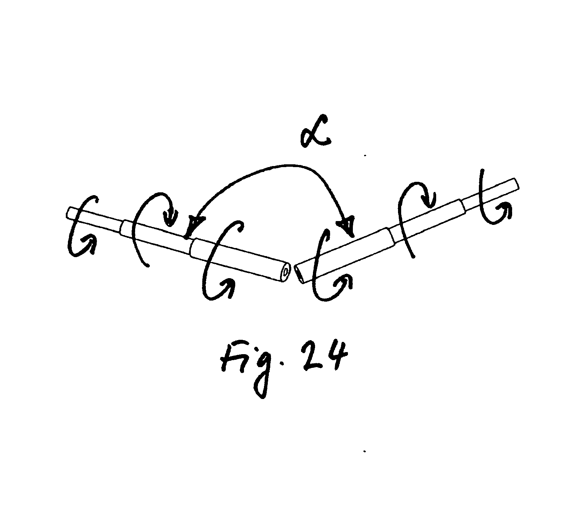

In **Fig 24** sind 2 Sätze von 3 ineinandergeschachtelten und gelagerten Wellen dargestellt. Die Wellen drehen sich mit unterschiedlichen Winkelsgeschwidigkeiten in unterschiedlichen Richtungen. Diese drei oder Mehrfachwellenanordnung wird gebraucht um die Raumorientierungseinheit (**4**) für Werkzeug nach **Fig 3** anzutreiben.

Der Markt liefert nicht derartige Verbindungen für mehrfach ineinander geschachtelten und gelagerten Wellen.

Daher besteht die nächste Aufgabe bei diesem Hybridroboter darin, eine räumliche gelenkige Verbindung zu entwickeln, um diese 2 Sätze von 3 oder mehr ineinandergeschachtelten und gelagerten Wellen so zu verbinden, dass die Drehbewegung von einem Antrieb-Mehrwellensatz **(30)** auf den anderen unter dem Winkel ALFA 1 positionierten Abtrieb-Mehrwellensatz übertragen wird.

Diese Aufgabe wird durch drei oder mehrfach in sich geschachtellte räumliche Viergelenketten erfinderisch gelöst.

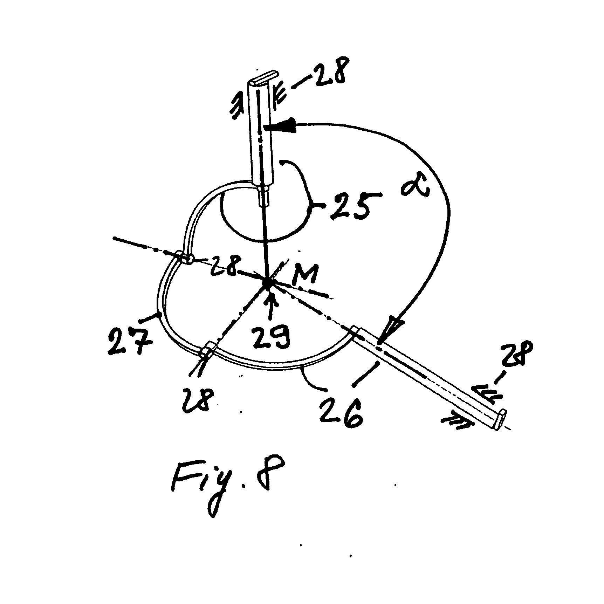

Eine einfache räumliche Viergelenkkette mit einem Antriebsglied (26), einem Abtriebsglied **(26),** 4 Drehgelenken **(28),** dessen Achsen sich in einem Schnittpunkt M **(29)** schneiden ist in der **Fig 8** dargestellt.

Bezugnehmend auf die **Fig. 3** befindet sich zwischen der raumfesten Befestigungsplatte **(19)** und der untere Koppelplatte **(13)** ein Satz von drei- oder mehrfach in sich gelagerten Wellen, ein zweiter Satz befindet sich zwischen der obere TCP Koppelplatte **(14)** und der untere Koppelplatte **(13).**

Eine Verbindung zwischen den mehrfach in sich in unterschiedliche Richtung drehenden Wellen wird mit einem erfinderischen benennen wir ihn als Mehrfachachsenraumgelenk gelöst.

Um diese Lagerungsänderung der mehreren ineinander gelagerten Stäbe zu ermöglichen wurde ein Mehrfachachsenraumgelenk das mehrere ineinander unter einem Winkel ALFA1 stehende Wellen verbindet, erfunden und entwickelt.

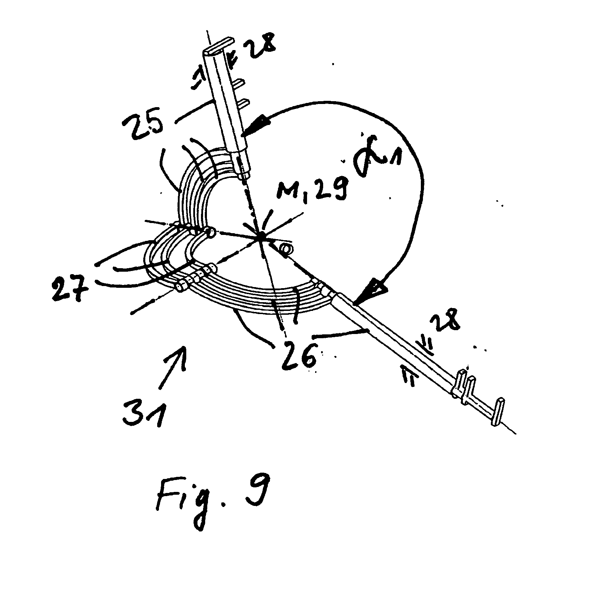

Das Mehrfachachsenraumgelenk, das aus mehreren räumlich ineinandergeschachtelten räumlichen Viergelenketten besteht ist in **Fig. 9****,****10** dargestellt. Eine einfache räumliche Viergelenkette ist in der **Fig. 8** dargestellt. Die räumliche Viergelenkkete ist dadurch gekenzeichnet, dass 4 Drehachsen der Drehgelenke **(28)** sich in einem Punkt M **(29)** schneiden.
Auch die Drehachsen der Drehgelenke von allen drei räumlichen ineinandergeschachtelten Viergelenkketten schneiden sich in einem einzigen Punkt M. Das charakteristische ist, dass sich die Wellen mit unterschiedlichen Geschwindigkeiten in unterschiedlichen Drehrichtungen drehen können, die räumlichen Koppelstangen **(27)** sind so angeordnet, dass keine Kolision zwischen Ihnen entsteht.

Die zwangsgeführten Koppelstangen **(27)** bewegen sich kolisionsfrei auf Raumflächen, die mit mehreren konzentrischen Raumkugeloberflächen beschrieben werden.

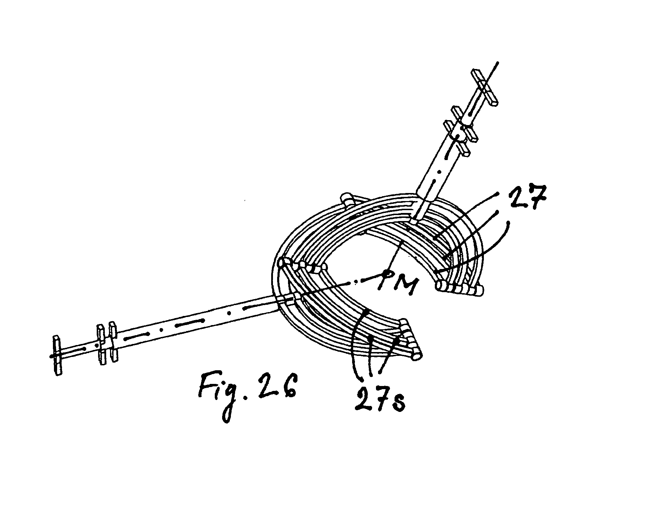

Eine kolisionsfreie Bewegung von mehreren räumlichen Koppeln **(27)** entsteht dadurch, dass die Abmessungen skalierbar verkleinert werden und somit in Richtung Mitellpunkt M rücken, so wie in der **Fig. 9** dargestellt ist. In **Fig 9** ist eine Winkelstellung der Wellen, bei der die räumlichen Koppel zueinander parallel liegen, dargestellt. Für mehr belastete Wellen kann das Mehrachsenraumgelenk mit doppelten Anzahl der räumlichen Koppelstangen nach der **Fig 26** ausgeführt werden. Die Koppelstangen **(27)** und **(27s)** sind symmetrisch gegenüber dem Achsenschnittpunkt M.

In **Fig 10** ist eine Winkelstellung der Wellen, bei der die räumlichen Koppeln **(27)** zueinander unterschiedliche kolisionsfreie Raumstellungen haben, dargestellt.

Das Mehrfachachsensraumgelenk **(31)** aus den **Fig. 9** und **10** stellt sicher, dass die Drehbwegungen von einem Antriebsatz von ineinandergelagerten Wellen auf den unter Winkel ALFA1 stehenden Abtriebsatz von ineinandergelagerten Wellen sicher übertragen wird.

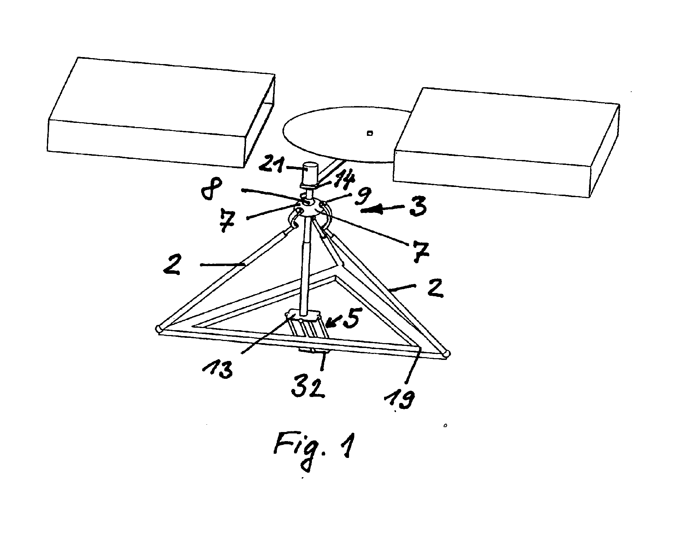

Die **Figuren 1****,****2****,****3****,****4****,****5****,****6****,****22** zeigen verschiedene Hybridroboter mit Komponenten wie das multifunktionale Raumgelenk (3), den Parallelitätshalter (5), und/oder das Mehrfachachsenraumgelenk **(31)**, wobei der Hybridroboter nur dann funktionstüchtig ist, wenn alle 3 Komponenten multifunktionale Raumgelenk **(3),** Parallelitätshalter **(5),** Mehrfachachsenraumgelenk **(31)** gleichzeitig zum Einsatz kommen.

In **Fig 1** ist ein Hybridroboter mit 4 Freiheitsgraden, der vorzüglich in der Waferfertigung eingesetzt werden kann, dargestellt.

In **Fig 2** ist eine einfachste Ausführung des Hybridroboters als ein Pick- and Place Roboter dargestellt. Die TCP-Platform **(14)** behält stets die Parallelität zu der Grundplatte **(19)** mit Hilfe des Paralleitätshalters **(5).**

In **Fig. 3** ist die rotatorische Orientierungseinheit auf der PCT-Koppelplatte positioniert, der Antrieb erfolgt über drei ineinander gelagerten Wellen, deren Getriebemotoren auf einer festen unbeweglichen Platte **(19)** positioniert sind, wobei der Richtungswechsel der Wellenachsen mit Hilfe des Mehrfachachsenraumgelenks **(31)** auf Basis von 3 räumlich ineinander geschachtelten Viergelenkketen sichergestellt wird.

In **Fig. 4** ist die rotatorische Orientierungseinheit **(4)** auf der PCT-Koppelplatte **(14)** positioniert, der Antrieb erfolgt über drei in sich gelagerte Wellen.

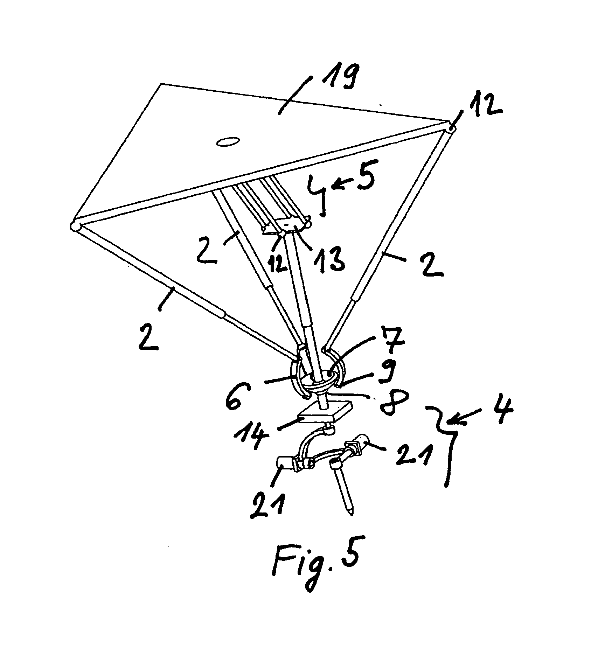

In **Fig. 5** ist ein Hybridroboter in einer hängenden Ausführung, desen rotatorische Orientierungseinheit **(4)** auf der PCT-Koppelplatte **(14)** positioniert ist, die Antriebe sind in der Handachse direkt integriert, dargestellt.

In **Fig. 6** ist eine auf dem Boden stehende Ausführung des Hybridroboter desen rotatorische Orientierungseinheit **(4)** auf der PCT-Koppelplatte **(14)** positioniert ist, die Antriebe sind in der Handachse direkt integriert, dargestellt.

In **Fig 22** ist ein Hybridroboter mit 6 Freiheitgraden dargestellt. Die rotatorische Orientierungseinheit **(4)** ist auf der Kugelkalotte **(7)** befestigt und die Getriebemotore **(21)** sind direkt in der Orientierungseinheit **(4)** integriert.

### Bezugszeichenliste

1. bewegte Platte eines Parallelkinematikroboteres - Hexapod
2. Linearaktor, Stab
3. multifunktionales Raumgelenk
4. Raumorientierungseinheit für Werkzeug, auch unter der Bezeichnung ist auch Zentralhand, Eulerhand
5. Parallelitätshalter
6. Gelenkverbindern
7. Kugelkallote bzw. Kegelkalotte
8. Kugelgelenk
9. Drehgelenk
10. Lagerung für Kugelgelenk
11. Koppelstäbe
12. Kardangelenk
13. untere Koppelplatte
14. obere TCP Koppelplatte
15. mit der unteren Koppelplatte fest verbundener Stab mit Linearführung
16. mit der oberen TCP Koppelplatte fest verbundener Stab mit Linearführung
17. Linearführung
18. Drei- oder Mehrfach ineinander gelagerte Wellen
19. Raumfeste Befestigungsplatte
20. ineinander lau fende Antriebsachsen / Antriebswellen
21. Getriebemotor
22. Kardangelenk
23. eine Antriebswelle
24. Dreiwellensatz, drei ineinandergeschachtelte Wellen
25. Antriebsglied, Antriebswelle
26. Abtriebsglied, Abtriebswelle
27. räumliche Koppel
27s. zweite räumliche Koppel symmetrisch bzüglich des Schnittpunkts M zu 27
28. Drehgelenk
29. Mittelpunkt der Drehachsen aller 4 Drehgelenke M
30. Dreiwellensatz, 3 ineinander geschachtelten und gelagerten Welle
31. Mehrfachachsenraumgelenk
32. Raumfeste Bodenplatte des Paralleitäthalters
33. Kardanaufhängung
34. Drehachse 1
35. Drehachse 2
36. Drehgelenkwürfel mit zwei Drehachsen
37. obere räumliche Koppelstange
38. räumlicher Dreharm um zwei Achsen kippbar.
39. Zweischlag, zwei mit Drehgelenk verbundene Arme
40. Drehgelenk
41. Parallelogramm (zwe Viergelenkketten)
42. Längträger, Längsachse
43. Querträger, Querachse
44. Höhenträger, Höhenachse
45. Schubgelenk
46. gelenkig gelagerter Schwenkarm
47. Stab gehörig zu TCP Platform (14)
48. Stab gehörig zum Zweischlag (39)
49. Stab gehörig zum Schwenkarm (50)
50. Drehgelagelagerter Schwenkarm

## Patentansprüche

1. Hybridroboter für unterschiedlichsten Anwendungen in der Handhabung von Werkstücken, in der Verpackungsindustrie, Waferhandling und für Anwendungen in automatisierbaren Prozessen, wobei der Hybridroboter folgende Merkmale aufweist:
- eine raumfeste Befestigungplatte;
drei zwischen der raumfesten Befestigungsplatte (19) und
einem multifunktionalem Raumgelenk (3) angeordnete Linearaktoren (2);
- ein Paralellitäthalter (5), der eine untere Koppelplatte (13) und eine obere Koppelplatte (14) aufweist, wobei die untere Koppelplatte (13) durch gelenkig angebrachte parallele Koppelstäbe (11) mit der raumfesten Befestigungsplatte (19) verbunden ist und ständig parallel zu dieser gehalten wird, wobei die untere Kopelplatte (13) durch eine senkrecht an dieser befestigte lineare Führung (17) mit der oberen Koppelplatte verbunden ist;
- eine an der oberen Koppelplatte (14) angebrachte Raumorientierungseinheit (4) für ein Werkzeug
- zwei Sätze von jeweils drei ineinander gelagerten Antriebswellen (20), die durch drei an der raumfesten Befestigungsplatte (19) befestigte Getriebemotoren (21) angetrieben werden und die Raumorientierungseinheit (4) antreiben, wobei der erste Satz von der raumfesten Befestigungsplatte (19) parallel zu den Koppelstäben (11) zu der unteren Koppelplatte (13) verläuft, wobei der zweite Satz von der unteren Koppelplatte (13) durch die lineare Führung (17) zu der oberen Koppelplatte (14) verläuft, und wobei beide Sätze im Bereich der unteren Kopelplatte (13) durch ein Mehrfachachsenraumgelenk (31) gekoppelt sind, der durch drei ineinandergeschachtelte Viergelenkketten, deren Gelenke vier sich in einem gemeinsamen Schnittpunkt (29) schneidende Drehachsen aufweisen, den Richtungswechsel der jeweils drei Antriebswellen sicherstellt.

2. Hybridroboter nach Anspruch 1 , **dadurch gekennzeichnet, dass** sich das multifunktionale Raumgelenk **(3)**, aus einer Kugelkalotte **(7)** bzw. Kegelkalotte, die drei Drehgelenke **(9)** und eine Kugellageraufnahme **(10)**, wahlweise Kardanaufhängung **(33)** beinhaltet, drei Gelenkverbinder **(6)** und einem Kugelgelenk **(8)** zusammensetzt, wobei wahlweise auf die Kugel- bzw. Kegelkalotte **(7)** direkt die Raumorientierungseinheit **(4)** befestigt werden kann.

3. Hybridroboter nach den vorhergehenden Ansprüchen , **dadurch gekennzeichnet, dass** der Parallelitäthalter **(5)** aus einer raumfesten Bodenplatte **(32)** und, zwei, drei oder vier Koppelstäben **(11)** besteht, die endseitig Kardangelenke **(12)** bzw. Kugelgelenke oder mehrfache Drehgelenke **(9)** haben.

4. Hybridroboter nach den vorhergehenden Ansprüchen , **dadurch gekennzeichnet, dass** die translatorische Lageänderung der unteren Koppelplatte**(13)** der Bewegung **des** Kugelgelenkes **(8)** exakt folgt wobei diese Zwangsbewegung durch die zwei Linearführung **(17)** sichergestellt wird, wobei die Linearführung **(17)** durch einen Stab **(16)** mit Verbindung zum Kugelgelenk **(8)** und einen Stab **(15)** mit Verbindung zur unteren Koppelplatte **(13)** gebildet wird.

5. Hybridroboter nach den vorhergehenden Ansprüchen , **dadurch gekennzeichnet, dass** die ineinander/geschachtelten Viergelenkketten zum gemeinsamen Schnittpunkt **(29)** der Drehgelenkachsen hin skalierbar verKleinert werden, wobei jede Viergelenkette sich aus einem Antriebsglied **(25)**, Abtriebsglied **(26)** und einer mit dem Antriebsglied und Abtriebsglied drehgelenkig verbundenden räumlichen Koppel **(27)**, in einfacher oder zweifacher Ausführung **(27s)**, zusammensetzt.

## Claims

1. The invention relates to a hybrid robot for a wide variety of applications in the handling of work pieces, in the packaging industry, wafer handling and for applications in processes which can be automated, wherein the hybrid robot has the following features:
a spatially fixed mounting plate; three linear actuators **(2)** arranged between the spatially fixed mounting plate **(19)** and a multi-functional universal joint **(3)**;
- a parallelism holder **(5)**, which has a bottom coupling plate **(13)** and a top coupling plate **(14)**, wherein the bottom coupling plate **(13)** is connected to the spatially-fixed mounting plate **(19)** by parallel coupling rods **(11)**, attached in a jointed manner, and is held constantly parallel thereto, wherein the bottom coupling plate **(13)** is connected to the top coupling plate by a linear guide **(17)** fastened perpendicular thereto;
- a spatial orientation unit **(4)** attached to the top coupling plate **(14)**, for a tool
- two sets of three drive shafts **(20)**, each mounted inside the other, which are driven by three gear motors **(21)** fastened to the spatially fixed mounting plate **(18)**, and drive the spatial orientation unit (4), wherein the first set extends from the spatially fixed mounting plate **(19)**, parallel to the coupling rods **(11)**, to the bottom coupling plate **(13)**, wherein the second set are coupled from the bottom coupling plate (13) via the linear guide **(17)** to the top coupling plate **(13)** by a multi-axis universal joint **(31)**, which secures the directional change of each of the three drive shafts via three four-joint chains nested within each other, the four joints of which have a rotation axis intersecting at a common point of intersection **(29)**

2. Hybrid robot according to claim 1, **characterized in that** the multi-functional universal joint **(3)** consists of a spherical calotte **(7)** or ball calotte which comprises three swivel joints **(9)** and a ball bearing seat **(10)**, optionally a cardan mount **(33)**, three joint connectors **(6)** and a spherical joint **(8)**, wherein the spatial orientation unit (4) can be optionally directly fastened to the spherical calotte **(7)**.

3. Hybrid robot according to the preceding claims, **characterized in that** the parallelism holder **(5)** consists of a spatially fixed floor plate **(32)** and two, three or four coupling rods **(11)**, which have cardan joints or a plurality of swivel joints **(9)** on one side.

4. Hybrid robot according to the preceding claims, **characterized in that** the translational position change of the bottom coupling plate **(13)** exactly follows the movement of the spherical joint **(8)**, wherein said forced movement by the linear guide **(17)**, wherein the linear guide is formed by a rod (16) connected to the spherical joint **(8)** and a rod **(15)** connected to the bottom coupling plate **(13)**.

5. Hybrid robot according to the preceding claims, **characterized in that** the four-joint chains nested within each other can be scaled down to the common point of intersection **(29)** of the swivel joint axes, wherein each of the four-joint chains consist of a drive link **(25)**, drive link **(26)** and a single or double design **(27s)**.

## Revendications

1. Robot hybride destiné à différentes applications dans la manipulation de pièces à façonner dans l'industrie de l'emballage, la manipulation de wafers et pour des applications dans des processus automatisés, le robot hybride présentant les caractéristiques suivantes :
une plaque de fixation stationnaire; trois actionneurs linéaires **(2)** disposés entre la plaque de fixation stationnaire **(19)** multifonctionnelle et une articulation spatiale **(3)**;
- un support de parallélisme **(5)** présentant une plaque de couplage inférieure **(13)** et une plaque de couplage supérieure **(14)**, la plaque de couplage inférieure **(13)** étant connectée à la plaque de fixation stationnaire **(19)** et maintenue constamment parallèle à celle-ci au moyen de barres de couplage **(11)** parallèles articulées, la plaque de couplage inférieure **(13)** étant connectée au moyen d'un guidage rectiligne **(17)** fixé perpendiculairement à celle-ci à la barre de fixation supérieure;
- une unité d'orientation spatiale **(4)** fixée à la plaque de couplage supérieure **(14)** pour un outil
- deux jeux de trois arbres d'entraînement **(20)** logés les uns dans les autres, entraînés par trois motoréducteurs **(21)** fixés à la plaque de fixation stationnaire **(18)** et entraînant l'unité d'orientation spatiale **(4)**, le premier jeu partant de la plaque de fixation stationnaire **(19)** parallèlement aux barres de couplage **(11)** en direction de la plaque de couplage inférieure **(13)** et le second jeu partant de la plaque de couplage inférieure **(13)** pour suivre le guidage rectiligne **(17)** jusqu'à la plaque de couplage supérieure **(13)**via une articulation spatiale à plusieurs axes **(31)** assurant le changement de direction des trois arbres d'entraînement respectifs au moyen de trois chaînes à quatre articulations emboîtées les unes dans les autres dont les quatre articulations se présentent dans des axes de rotation coupant un point de coupe **(29)** commun

2. Robot hybride selon la revendication 1, **caractérisé en ce que** l'articulation spatiale **(3)** multifonctionnelle est composée d'une calotte sphérique **(7)** ou d'une calotte conique comportant trois articulations rotatives **(9)** et un logement pour roulements à billes **(10)**, en option une suspension à cardan **(33)**, de trois raccordements articulés **(6)** et d'un joint à bille **(8)**, avec la possibilité de fixer directement l'unité d'orientation spatiale **(4)** à la calotte sphérique ou conique.

3. Robot hybride selon les revendications précédentes, **caractérisé en ce que** le support de parallélisme **(5)** est composé d'une plaque de fond **(32)** stationnaire et de de deux, trois ou quatre barres de couplage **(11)** disposant, d'un côté, de joints de cardan ou de multiples articulations rotatives **(9)**.

4. Robot hybride selon les revendications précédentes, **caractérisé en ce que** la modification translationnelle de position de la plaque de couplage inférieure **(13)** suit précisément le mouvement du joint à bille **(8)**, ce mouvement forcé étant permis par le guidage rectiligne **(17)** au moyen d'une barre (16) reliée au joint à bille **(8)** et d'une barre **(15)** reliée à la plaque de couplage inférieure **(13)**.

5. Robot hybride selon les revendications précédentes, **caractérisé en ce que** les chaînes à quatre articulations emboîtées les unes dans les autres sont réduites de manière modulable au niveau du point de coupe **(29)** commun des axes à articulation rotative, chacune des chaînes à quatre articulations se composant d'un élément d'entraînement **(25)**, d'un élément d'entraînement **(26)**, en un seul ou en double exemplaire **(27s)**.
